# EUROPEAN PATENT SPECIFICATION

(11) **EP 1 713 201 B1**
(45) Date of publication and mention of the grant of the patent: **18.02.2009**
(21) Application number: 05103029.4
(22) Date of filing: 15.04.2005
(51) Int. Cl.: H04L 12/22, G06K 7/00

(54) **Gathering randomness in a smart card reader**
Erfassung der Zufälligkeit in einem Chipkartenleser
Obtention de caractéristiques aléatoires dans un lecteur de carte à puce

(43) Date of publication of application: 18.10.2006
(73) Proprietor: Research In Motion Limited, Waterloo, Ontario N2L 3W8 (CA)
(72) Inventor: Adams, Neil, Waterloo, Ontario N2K 4E4 (CA); Brown, Michael S., Waterloo, Ontario N2K 4B1 (CA); Little, Herb, Waterloo, Ontario N2T 2V8 (CA); McCallum, Michael, Kitchener, Ontario N2A 4B8 (CA); Brown, Michael K., Kitchener, Ontario N2M 2Z2 (CA)
(74) Representative: Rickard, David John

(56) References cited:
- US-A1- 2002 080 965
- US-A1- 2004 109 567
- US-A1- 2004 188 519
- US-B1- 6 628 786

## Description

In general, wireless communication is insecure and vulnerable to attacks. Various techniques may be employed to secure a wireless communication link or to make it less vulnerable to attacks. For example, cryptographic techniques may be employed to secure a wireless communication link. The strength of an encrypted communication link depends on the quality of the cryptographic keys, which in turn, depends, at least in part, on the randomness of the keys. It is known to have a device maintain a randomness pool, i.e. a "pool" of random data, from which the device can extract random data. The extracted random data may be used in the generation of cryptographic keys.

US2004/188519 discloses a personal identification device comprising a smart card reader. The device may generate encryption keys from randomized sources by sampling voice or image data or by software calculations.

US2004/109567 discloses a system for generating an encryption key in an embedded device, such as a device embedded in a printer. According to US2004/109567, a driver in the host computer extracts random data from the computer and sends it over a local or a network connection to the embedded device. The device may use internal random data and the received random data as a source of entropy to seed the key generation.

### GENERAL

In a main aspect, the present invention provides a smart card reader that is arranged to incorporate traffic received from a smart card coupled to the smart card reader into a randomness pool of the smart card reader. The traffic received from the smart card may be forwarded by the smart card reader via a wireless communication channel. [0001d] In one embodiment there is provided a smart card reader comprising: a randomness pool; a processor; a wireless communication interface through which said smart card reader is able to communicate with another device via a wireless communication channel; and a memory adapted to store executable code means which, when executed by said processor, causes the smart card reader to incorporate traffic received from a smart card coupled to said smart card reader into said randomness pool, wherein said traffic received from said smart card is to be forwarded by said smart card reader via said wireless communication channel.

In another embodiment there is provided a system comprising: a smart card reader having a randomness pool; and a device comprising a source of random data, said device having installed thereon a driver for said smart card reader, wherein said driver is arranged to extract random data from said source and to send said extracted random data securely over a wireless communication link to said smart card reader, and said smart card reader is arranged to incorporate said extracted random data into said randomness pool, and wherein said smart card reader is arranged to incorporate traffic received from a smart card inserted therein and to be forwarded to the device or to another device into said randomness pool.

In yet another embodiment there is provided a method for gathering randomness in a smart card reader, the method comprising: incorporating traffic received from a smart card coupled to said smart card reader and to be forwarded to another device into a randomness pool of said smart card reader.

In yet another embodiment there is provided a machine readable medium comprising program code means which when being executed on a processor of the smart card reader described herein causes said reader to implement the method described herein.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:
Figure 1 is a schematic diagram of an exemplary system; and
Figure 2 is a block diagram of the exemplary system of Figure 1.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

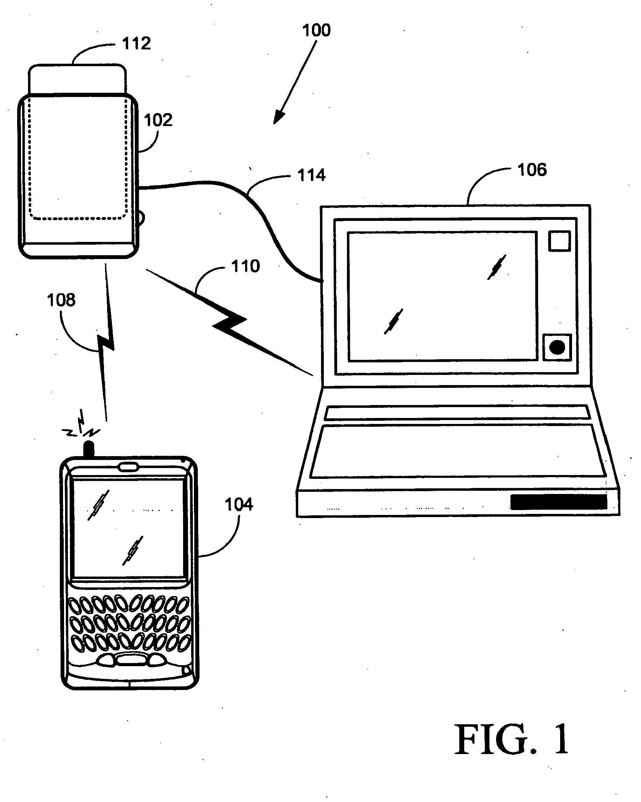

Reference is made to Figure 1, which is a schematic diagram of an exemplary system, according to some embodiments of the invention. A system 100 includes a wireless smart card reader 102, a mobile device 104 and a wireless-enabled personal computer 106. Smart card reader 102 and mobile device 104 are able to communicate over a wireless communication link 108. Smart card reader 102 and personal computer 106 are able to communicate over a wireless communication link 110. A non-exhaustive list of examples of wireless local area network standards for wireless communication links 108 and 110 includes the Institute of Electrical and Electronic Engineers (IEEE) for Wireless LAN MAC and Physical layer (PHY) 802.11 a, b, g and n specifications or future related standards, the Bluetooth® standard, the Zigbee^{™} standard and the like.

A smart card 112 is shown inserted into smart card reader 102. Smart cards are personalized security devices, defined by the ISO7816 standard and its derivatives, as published by the International Organization for Standardization. A smart card may have a form factor of a credit card and may include a semiconductor device. The semiconductor device may include a memory that can be programmed with security information (e.g., a private decryption key, a private signing key, biometrics, etc.) and may include a processor and/or dedicated logic, for example, dedicated decryption logic and/or dedicated signing logic. A smart card may include a connector for powering the semiconductor device and performing serial communication with an external device. Alternatively, smart card functionality may be embedded in a device having a different form factor and different communication protocol, for example a Universal Serial Bus (USB) device. The person whose security information is stored on smart card 112 may use smart card reader 102 for identification, to unlock mobile device 104 and/or personal computer 106, and to digitally sign and/or decrypt messages sent by mobile device 104 and/or personal computer 106. Smart card 112 may also include a random number generator.

For example, mobile device 104 may be able to send and receive e-mail messages via an e-mail server (not shown). If, for example, the Secure Multipurpose Internet Mail Extensions (S/MIME) protocol is used, e-mail messages received at mobile device 104 are encrypted using a symmetric algorithm with a random message key generated by the sender of the e-mail message. The e-mail message also includes the message key, encrypted using the public key of the recipient. Upon receipt of an encrypted e-mail message, mobile device 104 may extract the encrypted message key and send it to smart card reader 102 via communication link 108. Smart card reader 102 may send the encrypted message key to smart card 112, and the decryption engine of smart card 112 may decrypt the encrypted message key using the recipient's private decryption key, which is stored in smart card 112. Smart card reader 102 may retrieve the decrypted message key from smart card 112 and forward it to mobile device 104 via communication link 108 so that mobile device 104 can decrypt the received e-mail message. The smart card 112 may prevent unauthorized use of the recipient's private decryption key by requiring that a password or personal identification number (PIN) be supplied before allowing the decryption operation to proceed.

Similarly, to add a digital signature to an e-mail message being sent by mobile device 104, mobile device 104 may send a hash of the contents of the e-mail message to smart card reader 102 over communication link 108. Smart card reader 102 may pass the hash to smart card 112, which may produce a digital signature from the hash and the sender's private signing key, which is stored in smart card 112. Smart card 112 may then pass the digital signature to smart card reader 102, which may forward it to mobile device 104 via communication link 108 so that mobile device 104 can transmit it along with the e-mail message to the e-mail server. Again, smart card 112 may prevent unauthorized use of the recipient's private signing key by requiring that a password or PIN be supplied before allowing the signing operation to proceed.

The unencrypted message key should be sent securely over communication link 108 from smart card reader 102 to mobile device 104 to prevent a third party from retrieving the message key from communication link 108. Similarly, the hash to be signed should be sent authentically over communication link 108 from smart card reader 102 to mobile device 104 to prevent a third party from modifying the hash and thereby causing smart card 112 to produce a signature using a hash different from the hash of the intended message. Therefore communication link 108 may need to be secured using cryptographic techniques.

The person whose security information is stored on smart card 112 may wish to digitally sign outgoing e-mail sent from personal computer 106 or to decrypt incoming encrypted e-mail received at personal computer 106. This will require personal computer 106 to communicate with smart card reader 102 in much the same way as mobile device 104 communicates with smart card reader 102 as described above. For this purpose, or for other security-related measures (e.g. to permit the person to use personal computer 106), communication link 110 may need to be secured using cryptographic techniques.

To secure communication links 108 and 110, smart card reader 102 may need to generate various cryptographic keys. For example, if communication links 108 and 110 are Bluetooth® communication links, then a relatively short (up to 16-digits) key may be used for the Bluetooth® pairing procedure. An additional layer of security for communication links 108 and 110 may involve encryption with one or more additional keys. These additional keys may be generated from a shared secret between smart card reader 102 and mobile device 104, or smart card reader 102 and personal computer 106, and one or more symmetric keys based on this shared secret may be generated using known Diffie-Hellman and simple password exponential key exchange (SPEKE) methods and variants thereof. Moreover, random session keys may be generated for each individual communication session over communication link 108 or 110.

The strength of the encrypted channels between smart card reader 102 and mobile device 104 and personal computer 106 may depend, at least in part, on the quality of the encryption keys. The more random the data used to generate these keys, the less likely that an attacker will be able to figure out the keys, and the more secure the communication link.

Smart card reader 102 may therefore maintain a "randomness pool", also known as a "random pool" or an "entropy pool". A randomness pool is a "pool" of random data, which is "stirred" as input is incorporated into the pool, to ensure that there is no discernible pattern. Many different implementations of randomness pools and corresponding pseudo-random number generators are known.

For example, smart card reader 102 may store a 256-byte (2048-bit) long array, which is a list of all numbers from 0 to 255. A function may be used to permute the list based on input. A non-exhaustive list of examples for the function includes techniques of the RC4^{™} encryption algorithm (also known as ARCFOUR), hashing functions and the like. In another example, smart card reader 102 may implement a pseudo-random number generator based on the Yarrow pseudo-random number generator described in J. Kelsey, B. Schneier and N. Ferguson, "Yarrow-160: Notes on the Design and Analysis of the Yarrow Cryptographic Pseudorandom Number Generator", Sixth Annual Workshop on Selected Areas in Cryptography (Springer Verlag, August 1999).

The following is a non-exhaustive list of examples for methods to gather randomness for smart card reader 102. Any of these methods, or any combination of these methods, may be used.
(1) Randomness injected at manufacturing. A source of randomness at the manufacturing facility may be used to generate a random value to add to the randomness pool of smart card reader 102. For example, the source of randomness may be a pseudo-random number generator. Although an attacker may know the algorithm used by the pseudo-random number generator, the attacker does not know which value was used to seed the pseudo-random number generator and is unaware of the conditions and circumstances at the time the random value was added to the randomness pool of smart card reader 102.
(2) Random data injected to the smart card reader via an out-of-band communication link. Smart card reader 102 may include a connector, for example, a connector that accepts a USB cable. Smart card reader 102 may be connectable to personal computer 106 using a USB cable 114, for example, in order to charge a battery of smart card reader 102 and/or to upload software to smart card reader 102. The USB cable is an example of an out-of-band communication link, since it is authentic and secure and not vulnerable to attackers attempting to attack communication link 110. Personal computer 106 may include a randomness pool and may be able to provide smart card reader 102 with random data via the out-of-band communication link, and smart card reader 102 may then incorporate the random data into its randomness pool. Similarly, smart card reader 102 may be connectable to mobile device 104 via an out-of-band communication link, for example, a USB cable. Mobile device 104 may include a randomness pool and may be able to provide smart card reader 102 with random data via the out-of-band communication link, and smart card reader 102 may then incorporate the random data into its randomness pool.
(3) Secure transmission of random data over a wireless communication link to the smart card reader. Mobile device 104 may have a smart card reader driver installed thereon. Mobile device 104 may have a source of random data. The smart card reader driver installed on mobile device 104 may extract random data from the source of random data in mobile device 104, and may send the extracted random data securely to smart card reader 102 over communication link 108. Smart card reader 102 may incorporate the extracted random data received securely over communication link 108 into its own randomness pool. Similarly, personal computer 106 may have a smart card reader driver installed thereon. Personal computer 106 may have a source of random data. The smart card reader driver installed on personal computer 106 may extract random data from the source of random data in personal computer 106, and may send the extracted random data securely to smart card reader 102 over communication link 110. Smart card reader 102 may incorporate the extracted random data received securely over communication link 110 into its own randomness pool. This method may be performed periodically.
(4) Traffic received from the smart card is incorporated into the smart card reader's randomness pool. Smart card reader 102 may incorporate traffic received from smart card 112 into its randomness pool. Although some of the data stored on smart card 112 may not be random (e.g. biometrics, a person's name and other identification), the order in which this data is requested by smart card reader 102 may be unpredictable. Random elements may be included in some of the traffic received from smart card 112 by smart card reader 102, for example, the decrypted message key for an S/MIME e-mail message received at mobile device 102 or personal computer 106, and the digital signature produced by smart card 112 from the hash of the contents of an e-mail message and the e-mail sender's private signing key.
(5) Random data from a random number generator of a smart card inserted in the smart card reader is incorporated into the smart card reader's randomness pool. Smart card 112 may have a random number generator. A device having a driver for smart card reader 102 installed thereon, such as mobile device 102 or personal computer 106, may request random data from smart card 112 via smart card reader 102. Since this random data is traffic received by smart card reader 102 from smart card 112, then if smart card reader 102 implements method (4) above of incorporating traffic received from smart card 112 in its randomness pool, this random data generated by the random number generator of smart card 112 will be incorporated into the randomness pool of smart card reader 102.
(6) Incorporating into the randomness pool of the smart card reader a random session key generated by another device that is used to encrypt traffic between the device and the smart card reader. Mobile device 102 or personal computer 106 may generate a random session key and use it to encrypt traffic to smart card reader 102 over communication link 108 or 110, respectively. Smart card reader 102 may incorporate the random session key into its randomness pool.

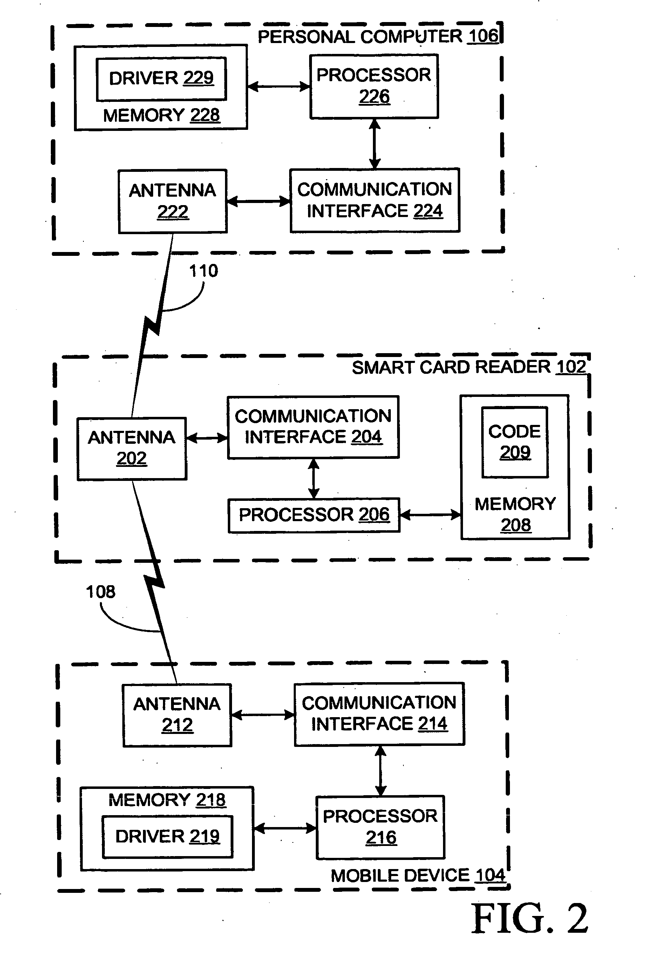

Figure 2 is a block diagram of system 100, according to some embodiments of the invention. For clarity, some components of smart card reader 102, mobile device 104, and personal computer 106 are not shown in Figure 2 and are not described explicitly below.

Smart card reader 102, mobile device 104 and personal computer 106 include antennae 202, 212, and 222, respectively. A non-exhaustive list of examples for antennae 202, 212 and 222 includes dipole antennae, monopole antennae, multilayer ceramic antennae, planar inverted-F antennae, loop antennae, shot antennae, dual antennae, omnidirectional antennae and any other suitable antennae.

Smart card reader 102, mobile device 104 and personal computer 106 include communication interfaces 204, 214, and 224, respectively, which are coupled to antennae 202, 212, and 222, respectively. A non-exhaustive list of examples for standards with which communication interfaces 204, 214 and 224 may be compatible includes 802.11 a, b, g and n and future related standards, the Bluetooth® standard, the Zigbee^{™} standard and the like.

Smart card reader 102 also includes a processor 206 coupled to communication interface 204, and a memory 208, which may be fixed in or removable from smart card reader 102. Memory 208 may be coupled to processor 206 or partly embedded in processor 206. Communication interface 204 and processor 206 may be part of the same integrated circuit or in separate integrated circuits. Similarly, processor 206 and memory 208 may be part of the same integrated circuit or in separate integrated circuits.

Mobile device 104 also includes a processor 216 coupled to communication interface 214, and a memory 218, which may be fixed in or removable from mobile device 104. Memory 218 may be coupled to processor 216 or partly embedded in processor 216. Communication interface 214 and processor 216 may be part of the same integrated circuit or in separate integrated circuits. Similarly, processor 216 and memory 218 may be part of the same integrated circuit or in separate integrated circuits.

Personal computer 106 also includes a processor 226 coupled to communication interface 224, and a memory 228, which may be fixed in or removable from personal computer 106. Memory 228 may be coupled to processor 226 or partly embedded in processor 226. Communication interface 224 and processor 226 may be part of the same integrated circuit or in separate integrated circuits. Similarly, processor 226 and memory 228 may be part of the same integrated circuit or in separate integrated circuits.

A non-exhaustive list of examples for processors 206, 216 and 226 includes a central processing unit (CPU), a digital signal processor (DSP), a reduced instruction set computer (RISC), a complex instruction set computer (CISC) and the like. Furthermore, processors 206, 216 and 226 may be part of an application specific integrated circuit (ASIC) or may be a part of an application specific standard product (ASSP).

A non-exhaustive list of examples for memories 206, 216 and 226 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

Memories 218 and 228 may store respective drivers 219 and 229 for smart card reader 102. Drivers 219 and 229 may implement portions of the methods described hereinabove.

Memory 208 may store executable code 209 which, when executed by processor 206, may cause smart card reader 102 to incorporate data into its randomness pool. Executable code 209 may implement portions of the methods described hereinabove.

While certain features of the invention have been illustrated and described herein, many modifications, substitutions, changes, and equivalents will now occur to those of ordinary skill in the art. It is, therefore, to be understood that the appended claims are intended to cover all such modifications and changes.

## Claims

1. A system (100) comprising:
a smart card reader (102) having a randomness pool; and
a device (104, 106) comprising a source of random data, said device (104, 106) having installed thereon a driver (219, 229) for said smart card reader (102),
wherein said driver (219, 229) is arranged to extract random data from said source and to send said extracted random data securely over a wireless communication link (108, 110) to said smart card reader (102), and said smart card reader (102) is arranged to incorporate said extracted random data into said randomness pool, and
wherein said smart card reader (102) is arranged to incorporate traffic received from a smart card (112) inserted therein and to be forwarded to the device (104, 106) or to another device (104,106) into said randomness pool.

2. The system (100) of claim 1, wherein said smart card (112) has a random number generator and said traffic comprises random data generated by said random number generator.

3. The system (100) of claim 1 or claim 2, wherein an implementation of said randomness pool comprises a list, and said smart card reader (102) is arranged to incorporate said traffic into said randomness pool by permuting said list according to a function of at least said traffic and said smart card reader (102) is arranged to incorporate said extracted random data into said randomness pool by permuting said list according to a function of at least said extracted random data.

4. The system (100) of any one of claims 1 to 3, wherein said device is a mobile device (104) and/or a personal computer (106).

5. The system (100) of any one of claims 1 to 4, wherein said wireless communication link (108, 110) is a Bluetooth® communication link.

6. A smart card reader (102) comprising:
a randomness pool;
a processor (206);
a wireless communication interface (204) through which said smart card reader (102) is able to communicate with another device (104, 106) via a wireless communication channel; and
a memory (208) adapted to store executable code means (209) which, when executed by said processor (206), causes the smart card reader (102) to incorporate traffic received from a smart card (112) coupled to said smart card reader (102) into said randomness pool, wherein said traffic received from said smart card (112) is to be forwarded by said smart card reader (102) via said wireless communication channel.

7. The smart card reader (102) of claim 6, wherein an implementation of said randomness pool comprises a list, and said executable code means (209), when executed by said processor (206), incorporates said traffic into said randomness pool by permuting said list according to a function of at least said traffic.

8. The smart card reader (102) of claim 6 or claim 7, wherein said traffic comprises random data generated by a random number generator of said smart card.

9. A method for gathering randomness in a smart card reader (102), the method comprising:
incorporating traffic received from a smart card (112) coupled to said smart card reader (102) and to be forwarded to another device (104, 106) into a randomness pool of said smart card reader (102).

10. The method of claim 9, wherein said smart card (112) has a random number generator and said traffic includes random data requested by a device (104, 106) coupled to said smart card reader (102).

11. The method of claim 9 or claim 10, wherein an implementation of said randomness pool comprises a list and incorporating said traffic into said randomness pool comprises permuting said list according to a function of at least said traffic.

12. The method of any one of claims 9 to 11, the method further comprising:
receiving random data transmitted securely over a wireless link (108, 110) by a device (104, 106) comprising a source of random data; and
incorporating said received random data in said randomness pool.

13. The method of claim 12, wherein said wireless communication link (108, 110) is a Bluetooth® communication link.

14. A machine readable medium (208) comprising program code means which when being executed on a processor (206) of the smart card reader (102) of any one of claims 6 to 8 causes said reader to implement the method of any one of claim 9 to 13.

## Patentansprüche

1. System (100), umfassend:
einen Chipkartenleser (102) mit einem Zufälligkeits-Pool; und
ein Gerät (104, 106), umfassend eine Quelle von Zufallsdaten, und auf dem Gerät (104, 106) ist ein Treiber (219, 229) für den Chipkartenleser (102) installiert,
wobei der Treiber (219, 229) dazu eingerichtet ist, Zufallsdaten aus der Quelle zu extrahieren und die extrahierten Zufallsdaten sicher über eine drahtlose Kommunikationsverbindung (108, 110) zu dem Chipkartenleser (102) zu senden, und der Chipkartenleser (102) dazu eingerichtet ist, die extrahierten Zufallsdaten in den Zufälligkeits-Pool aufzunehmen, und
wobei der Chipkartenleser (102) dazu eingerichtet ist, den Verkehr, der von einer in ihn eingeführten Chipkarte (112) empfangen wird und zu dem Gerät (104, 106) oder zu einem anderen Gerät (104, 106) weitergeleitet werden soll, in den Zufälligkeits-Pool aufzunehmen.

2. System (100) gemäß Anspruch 1, wobei die Chipkarte (112) über einen Zufallszahlengenerator verfügt und der Verkehr Zufallsdaten umfasst, die durch den Zufallszahlengenerator erzeugt wurden.

3. System (100) gemäß Anspruch 1 oder Anspruch 2, wobei eine Implementierung des Zufälligkeits-Pools eine Liste umfasst, und der Chipkartenleser (102) dazu eingerichtet ist, den Verkehr in den Zufälligkeits-Pool aufzunehmen, indem die Liste entsprechend einer Funktion mindestens des Verkehrs permutiert wird, und der Chipkartenleser (102) dazu eingerichtet ist, die extrahierten Zufallsdaten in den Zufälligkeits-Pool aufzunehmen, indem die Liste entsprechend einer Funktion mindestens der extrahierten Zufallsdaten permutiert wird.

4. System (100) gemäß einem der Ansprüche 1 bis 3, wobei das Gerät ein Mobilgerät (104) und/oder ein PC (Personal Computer) (106) ist.

5. System (100) gemäß einem der Ansprüche 1 bis 4, wobei die drahtlose Kommunikationsverbindung (108, 110) eine Bluetooth®-Kommunikationsverbindung ist.

6. Chipkartenleser (102), umfassend:
einen Zufälligkeits-Pool;
einen Prozessor (206);
eine Drahtloskommunikationsschnittstelle (204), über die der Chipkartenleser (102) mit einem anderen Gerät (104, 106) über einen drahtlosen Kommunikationskanal kommunizieren kann; und
einen Speicher (208), der dazu eingerichtet ist, ausführbare Codemittel (209) zu speichern, die bei ihrer Ausführung durch den Prozessor (206) bewirken, dass der Chipkartenleser (102) den Verkehr, der von einer mit dem Chipkartenleser (102) gekoppelten Chipkarte (112) empfangen wird, in den Zufälligkeits-Pool aufnimmt, wobei der von der Chipkarte (112) empfangene Verkehr durch den Chipkartenleser (102) über den drahtlosen Kommunikationskanal weitergeleitet werden soll.

7. Chipkartenleser (102) gemäß Anspruch 6, wobei eine Implementierung des Zufälligkeits-Pools eine Liste umfasst, und die ausführbaren Codemittel (209) bei Ausführung durch den Prozessor (206) den Verkehr in den Zufälligkeits-Pool aufnehmen, indem die Liste entsprechend einer Funktion mindestens des Verkehrs permutiert wird.

8. Chipkartenleser (102) gemäß Anspruch 6 oder Anspruch 7, wobei der Verkehr Zufallsdaten umfasst, die durch einen Zufallszahlengenerator der Chipkarte erzeugt wurden.

9. Verfahren zum Erfassen der Zufälligkeit in einem Chipkartenleser (102), das Verfahren umfassend:
das Aufnehmen des Verkehrs, der von einer mit dem Chipkartenleser (102) gekoppelten Chipkarte (112) empfangen wird und zu einem anderen Gerät (104, 106) weitergeleitet werden soll, in einen Zufälligkeits-Pool des Chipkartenlesers (102).

10. Verfahren gemäß Anspruch 9, wobei die Chipkarte (112) über einen Zufallszahlengenerator verfügt und der Verkehr Zufallsdaten umfasst, die von einem Gerät (104, 106) angefordert werden, das mit dem Chipkartenleser (102) gekoppelt ist.

11. Verfahren gemäß Anspruch 9 oder Anspruch 10, wobei eine Implementierung des Zufälligkeits-Pools eine Liste umfasst und das Aufnehmen des Verkehrs in den Zufälligkeits-Pool das Permutieren der Liste entsprechend einer Funktion mindestens des Verkehrs umfasst.

12. Verfahren gemäß einem der Ansprüche 9 bis 11, das Verfahren des Weiteren umfassend:
das Empfangen von Zufallsdaten, die sicher über eine Drahtlosverbindung (108, 110) durch ein Gerät (104, 106) übertragen werden, das eine Quelle von Zufallsdaten umfasst; und
das Aufnehmen der empfangenen Zufallsdaten in den Zufälligkeits-Pool.

13. Verfahren gemäß Anspruch 12, wobei die drahtlose Kommunikationsverbindung (108, 110) eine Bluetooth®-Kommunikationsverbindung ist.

14. Maschinenlesbares Medium (208), umfassend ausführbare Codemittel, die bei Ausführung auf einem Prozessor (206) des Chipkartenlesers (102) gemäß einem der Ansprüche 6 bis 8 den Leser dazu bringen, das Verfahren gemäß einem der Ansprüche 9 bis 13 zu implementieren.

## Revendications

1. Un système (100) comportant :
un lecteur de carte à puce (102) ayant une réserve d'aléatoire ; et
un dispositif (104, 106) comportant une source de données aléatoires, un pilote (219, 229) pour ledit lecteur de carte à puce (102) étant installé sur ledit dispositif (104, 106),
dans lequel ledit pilote (219, 229) est agencé pour extraire des données aléatoires de ladite source et pour envoyer lesdites données aléatoires extraites de façon sécurisée sur une liaison de communication sans fil (108, 110) audit lecteur de carte à puce (102), et ledit lecteur de carte à puce (102) est agencé pour incorporer lesdites données aléatoires extraites dans ladite réserve d'aléatoire, et
dans lequel ledit lecteur de carte à puce (102) est agencé pour incorporer le trafic reçu d'une carte à puce (112) insérée à l'intérieur de celui-ci et devant être transmis au dispositif (104, 106) ou à un autre dispositif (104, 106) dans ladite réserve d'aléatoire.

2. Le système (100) de la revendication 1, dans lequel ladite carte à puce (112) a un générateur de nombres aléatoires et ledit trafic comporte des données aléatoires générées par ledit générateur de nombres aléatoires.

3. Le système (100) de la revendication 1 ou de la revendication 2, dans lequel une implémentation de ladite réserve d'aléatoire comporte une liste, et ledit lecteur de carte à puce (102) est agencé pour incorporer ledit trafic dans ladite réserve d'aléatoire en permutant ladite liste selon une fonction d'au moins ledit trafic et ledit lecteur de carte à puce (102) est agencé pour incorporer lesdites données aléatoires extraites dans ladite réserve d'aléatoire en permutant ladite liste selon une fonction d'au moins lesdites données aléatoires extraites.

4. Le système (100) de n'importe laquelle des revendications 1 à 3, dans lequel ledit dispositif est un dispositif mobile (104) et/ou un ordinateur personnel (106).

5. Le système (100) de n'importe laquelle des revendications 1 à 4, dans lequel ladite liaison de communication sans fil (108, 110) est une liaison de communication Bluetooth®.

6. Un lecteur de carte à puce (102) comportant :
une réserve d'aléatoire ;
un processeur (206) ;
une interface de communication sans fil (204) grâce à laquelle ledit lecteur de carte à puce (102) est en mesure de communiquer avec un autre dispositif (104, 106) par l'intermédiaire d'un canal de communication sans fil ; et
une mémoire (208) adaptée pour stocker des moyens de code exécutables (209) qui, lorsqu'ils sont exécutés par ledit processeur (206), amènent le lecteur de carte à puce (102) à incorporer le trafic reçu d'une carte à puce (112) couplée audit lecteur de carte à puce (102) dans ladite réserve d'aléatoire, dans lequel ledit trafic reçu de ladite carte à puce (112) doit être transmis par ledit lecteur de carte à puce (102) par l'intermédiaire dudit canal de communication sans fil.

7. Le lecteur de carte à puce (102) de la revendication 6, dans lequel une implémentation de ladite réserve d'aléatoire comporte une liste, et lesdits moyens de code exécutables (209), lorsqu'ils sont exécutés par ledit processeur (206), incorporent ledit trafic dans ladite réserve d'aléatoire en permutant ladite liste selon une fonction d'au moins ledit trafic.

8. Le lecteur de carte à puce (102) de la revendication 6 ou de la revendication 7, dans lequel ledit trafic comporte des données aléatoires générées par un générateur de nombres aléatoires de ladite carte à puce.

9. Un procédé pour accumuler de l'aléatoire dans un lecteur de carte à puce (102), le procédé comportant :
l'incorporation du trafic reçu d'une carte à puce (112) couplée audit lecteur de carte à puce (102) et devant être transmis à un autre dispositif (104, 106) dans une réserve d'aléatoire dudit lecteur de carte à puce (102).

10. Le procédé de la revendication 9, dans lequel ladite carte à puce (112) a un générateur de nombres aléatoires et ledit trafic comprend les données aléatoires demandées par un dispositif (104, 106) couplé audit lecteur de carte à puce (102).

11. Le procédé de la revendication 9 ou de la revendication 10, dans lequel une implémentation de ladite réserve d'aléatoire comporte une liste et l'incorporation dudit trafic dans ladite réserve d'aléatoire comporte la permutation de ladite liste selon une fonction d'au moins ledit trafic.

12. Le procédé de n'importe laquelle des revendications 9 à 11, le procédé comportant de plus :
la réception des données aléatoires transmises de façon sécurisée sur une liaison sans fil (108, 110) par un dispositif (104, 106) comportant une source de données aléatoires ; et
l'incorporation desdites données aléatoires reçues dans ladite réserve d'aléatoire.

13. Le procédé de la revendication 12, dans lequel ladite liaison de communication sans fil (108, 110) est une liaison de communication Bluetooth®.

14. Un support lisible par machine (208) comportant des moyens de code de programme qui, lorsqu'ils sont en cours d'exécution sur un processeur (206) du lecteur de carte à puce (102) de n'importe laquelle des revendications 6 à 8, amènent ledit lecteur à implémenter le procédé de n'importe laquelle des revendications 9 à 13.
